# EUROPEAN PATENT SPECIFICATION

(11) **EP 0 632 657 B1**
(45) Date of publication and mention of the grant of the patent: **07.01.1999**
(21) Application number: 94108220.8
(22) Date of filing: 27.05.1994
(51) Int. Cl.: H04N 7/32

(54) **Method of prediction of a video image**
Verfahren zur Prädiktion eines Bildes
Méthode pour la prédiction d'une image vidéo

(30) Priority: 02.06.1993 FI 932520
(43) Date of publication of application: 04.01.1995
(73) Proprietor: NOKIA MOBILE PHONES LTD., 24101 Salo (FI)
(72) Inventor: Haavisto, Petri, SF-33230 Tampere (FI); Campbell, George, SF-33720 Tampere (FI); Nieweglowski, Jacek, c/o Välikangas, SF-33270 Tampere (FI)
(74) Representative: Johansson, Folke Anders

(56) References cited:
- WO-A-92/03799
- VISUAL COMMUNICATIONS AND IMAGE PROCESSING '91: VISUAL COMMUNICATION, vol.1605, 11 November 1991, BOSTON, MASSACHUSETTS, USA pages 546 - 557 Y. NAKAYA ET AL. 'An Iterative Motion Estimation Method Using Triangular Patches for Motion Compensation'
- IMAGE ANALYSIS. PROCEEDINGS OF THE 5TH SCANDINAVIAN CONFERENCE ON IMAGE ANALYSIS, 1 June 1987, STOCKHOLM, JUNE 1987 pages 109 - 116 H. MAITRE ET AL. 'Combination of Dynamic Programming and Autoregressive Model for Elastic Matching of Distorted Images'
- PROCEEDINGS OF THE 2ND SINGAPORE INTERNATIONAL CONFERENCE ON IMAGE PROCESSING, 7 September 1992, SINGAPORE pages 298 - 302 C.L. HUANG ET AL. 'A Motion Compensation for Video Signal Using Hierarchical Grid Interpolation Method'
- INTERNATIONAL CONFERENCE ON CONSUMER ELECTRONICS ICCE '93, 8 June 1993, ROSEMONT, IL, USA pages 141 - 150, XP396273 J. NIEWEGLOWSKI ET AL. 'A Novel Video Coding Scheme Based on Temporal Prediction Using Digital Image Warping'
- PROCEEDINGS OF THE 1993 PICTURE CODING SYMPOSIUM, 17 March 1993, LAUSANNE, CH pages 1 - 3, XP346432 V. SEFERIDIS ET AL. 'A General Approach to Block Matching Motion Estimation'

## Description

This invention relates to a method for predicting a video image on the basis of a preceding video image in a processing order for use in compressed transmission or storing of video images, wherein a prediction is generated for a video image to be encoded in an encoder encoding the video image on the basis of a preceding image in a processing order. The invention relates especially to a prediction method for use in video image compression to be applied especially in so-called hybrid encoders based on temporal prediction and transform encoding.

In predictive video compression methods, a transmitter (encoder) generates a prediction of an image to be encoded by utilizing an image preceding in the processing order, that is, in practice, in most cases either the preceding or the following image. The prediction is generated in a manner such that the same prediction can be generated in a receiver (decoder) while additionally utilizing transmitted control information. Compression of an image is effected by transmitting only the difference between the predicted image and the actual image to the receiver, so that the decoder is able to calculate the actual image on the basis of the received prediction error and the prediction image produced by it.

The prediction error to be transmitted is usually quantized to increase the compression ratio. The image produced by the receiver is thereby not identical with the transmitted image, and the encoding is said to be lossy. It is to be noted that the encoder is thus not able to generate the prediction on the basis of the original image, which is not available to the decoder, but the encoder has to produce the same image as the decoder.

Prediction of an image may take place either spatially, temporally, or as a combination thereof. In spatial prediction, a prediction is generated from the transmitted pixels of the image to be encoded. Temporal prediction in turn utilizes images that have already been transmitted and aims to utilize temporal redundancy.

Present-day compression methods are usually so-called hybrid encoding methods. Such methods eliminate temporal redundancy by temporal prediction, and spatial redundancy is usually eliminated by discrete cosine transform or so-called subband encoding (discrete cosine transform may also be regarded as a special case of subband encoding). As used in this patent application, the expression transform encoding refers to discrete cosine transform and subband encoding. Transform encoding also includes other less frequently used orthogonal transforms in addition to discrete cosine transform. Hybrid encoding thus combines prediction and transform encoding. The transform encoding portion of hybrid encoding may also be replaced by other methods utilizing spatial correlation, such as vector quantization.

The simplest way to generate a temporal prediction is to utilize a preceding image in the processing order as such as the prediction of an image to be encoded. If there occurs motion in the image, this method, however, may cause major prediction errors. Modern hybrid encoders therefore use the preceding image in the processing order for prediction through so-called motion compensation. Modern methods perform motion compensation by fixed blocks (usually 16x16 pixels). The preceding image in the processing order (the reference image) is searched to find a block bearing the closest resemblance to a block to be predicted in the image to be encoded. The size and shape of the block are thus limited in advance. Information formation on the selected prediction block is as a motion vector indicating the reference image area from which the block is taken.

To improve motion compensation, this block-based method has been complemented in various ways. In the CCITT recommendation H.261 a block selected as a prediction can be filtered by a so-called loop filter, which makes the prediction smoother and eliminates errors possibly formed in the prediction during compression. In the ISO standard MPEG-1 the accuracy of motion compensation can be increased by the use of a more accurate reference image. The image is obtained by increasing the resolution of the decoded image by interpolation so as to double it in the horizontal and vertical direction. This allows an accuracy of half a pixel in motion vectors.

Another improvement effected in the MPEG-1 standard is that a prediction of both the preceding and the following image in time, or their average value, is used for some of the images to be encoded. To effect this, it is necessary to change the order of the images to be transmitted in the encoder.

Attempts have also been made to improve the accuracy of motion compensation by allowing the use of prediction blocks of different sizes. The selection of a smaller block improves the entire prediction of the block, but it is thereby necessary to transmit a larger number of motion vectors to the receiver.

In present-day encoding methods, the use of several prediction methods is effected by so-called prediction modes. The most suitable prediction mode is selected for each image block (usually 16x16 pixels), and the selected mode is transmitted to the receiver to inform it so that it will be able to generate the same prediction. The use of several modes improves the prediction; correspondingly, the transmission capacity required for informing about the mode is the greater the higher the number of modes.

Block-based motion compensation is based on the assumption that the size of the block is so small that the block represents a single moving object. Motion should also be purely a displacement at the same distance from the camera. Motions poorly predictable by block-based motion compensation include rotation, zooming, and displacement of objects closer to and farther from the camera. The fixed size of the block also causes problems as there are always blocks in which a portion of the block belongs to the background and a portion to a moving object. In such a case, the prediction will be erroneous either with respect to the background or the moving object.

Improved methods based on the rejection of a fixed, rectangular block size have been suggested for prediction. Such methods, however, have not been used in connection with hybrid encoding. The use of the improved prediction methods in connection with hybrid encoding is difficult mainly for two reasons:
1. Many of the suggested methods are far too demanding in terms of calculation in order that they could be used in practical encoders. Even now the motion-compensated prediction is a function having clearly the greatest demand for encoder calculating capacity.
2. In many methods, transmission of additional information needed for generating a prediction to the receiver requires too much transmission capacity.
   Despite its problems, an advantage of the present prediction method is that block-based prediction is well-suited for use together with block-based transform encoding. Transmission of motion vectors needed for forwarding the prediction takes place efficiently in connection with the transmission of encoded blocks. If prediction and transform encoding are independent of each other, this advantage is lost.

Two examples of such improved prediction methods will be set forth below:
1. Bilinear interpolation of a motion vector field. In this method, a dedicated motion vector is provided for each pixel. However, in the same way as in the presently used method, a single motion vector is calculated and transmitted for each block. A dedicated vector is interpolated for each pixel by the use of the vectors of four surrounding blocks. An advantage obtained thereby is that the block structure disappears from the prediction image.
2. Use of quadrangles of arbitrary shape as blocks. In this method, four vectors representing the motion of the corners of the block are transmitted for each block. The shape of the block is thus not necessary the same in the image to be encoded and in the reference image. Geometric transformation is used to generate a prediction block. In terms of calculation, this method may be thousands or even millions of times more demanding than the methods presently in use. The method has no practical importance. See also VISUAL COMMUNICATIONS AND IMAGE PROCESSING '91: VISUAL COMMUNICATION, vol.1605, 11 November 1991, BOSTON, MASSACHUSETTS, USA pages 546 - 557, Y. NAKAYA ET AL. 'An Iterative Motion Estimation Method Using Triangular Patches for Motion Compensation' disclosing triangle and hexagonal motion estimation, which methods are not block based.

The object of the present invention is to provide a new motion-compensated prediction method for use especially in hybrid encoders, which method avoids most of the above-mentioned drawbacks and problems of the prior art methods. The object is thus to achieve a method which either replaces entirely the motion-compensated prediction used in present-day hybrid encoders or can be used in parallel with the prior art motion-compensation methods. A new prediction mode is thus introduced for the new way of prediction.

A prediction method according to the invention which achieves the above objects is characterized by
dividing the video image to be encoded into blocks;
selecting a point from each block of the image to be encoded as the basic point of the concerned block, the basic points of the different blocks dividing the image to be encoded into quadrangle-shaped basic areas;
searching the preceding image in the processing order to find points corresponding to the basic points of the image to be encoded, the corresponding points dividing the preceding image in the processing order into quadrangle-shaped corresponding areas;
defining a motion vector for each pair of a basic point and a corresponding point, the motion vector indicating displacement between the points; and
performing a geometric transformation on the quadrangle-shaped corresponding areas so as to transform them into the size and shape of their basic areas for generating predictions for the basic areas of the image to be encoded.

The starting point in this embodiment of the method according to the invention is the image to be encoded, and the basic points are located in the freely selectable blocks of arbitrary shape of the image to be encoded. Alternatively, however, it is possible that the preceding image in the processing order is taken as a starting point. In such a case, the method according to the invention is characterized by
dividing the preceding image in the processing order into blocks;
selecting a point from each block of the preceding image in the processing order as a basic point of the concerned block, the basic points of the different blocks dividing the preceding image in the processing order into quadrangle-shaped basic areas;
searching the image to be encoded to find points corresponding to the basic points of the blocks of said preceding image in the processing order in the image to be encoded, the corresponding points dividing the image to be encoded into corresponding quadrangle-shaped areas;
defining a motion vector for each pair of a basic point and a corresponding point, the motion vector indicating displacement between the points; and
performing a geometric transformation on the quadrangle-shaped basic areas so as to transform them into the size and shape of their corresponding areas for generating predictions for the basic areas of the image to be encoded.

If the image to be encoded is taken as a starting point, all points in the blocks that can be located unambiguously can be taken as basic points for the blocks. Examples of such points are the point at the left top corner of the block and the mid-point of the block. If the preceding image, which has already been encoded, is taken as a starting point, it is possible to make, in addition to the above-mentioned selections, unambiguous selections based on an object in the image itself. One example is a point which is closest to the mid-point of the block and positioned at the edge of an object in the image.

In the method according to the invention the encoder thus selects a number of points either from the image to be encoded or from the reference image, and searches the image to be encoded or the reference image to find corresponding motion-compensated points for the reference image or the image to be encoded, respectively. The points are always selected such that the decoder will be able to make the same selection without any additional information from the encoder. The encoder indicates the position of the corresponding points, that is, the motion of the selected points between the image to be encoded and the reference image, to the decoder by means of motion vectors.

The selected points and the points corresponding to them divide the image to be encoded and the reference image into quadrangle-shaped areas (the quadrangle may be "transformed" into a triangle, a line, or a point, if many of the selected points are mapped onto the same corresponding point). Each quadrangle of the image to be encoded has an area corresponding to it in the reference image. A prediction of the quadrangle to be encoded is generated by mapping its corresponding area, which may thus be of different shape than the area to be encoded, into the shape and size of the area of the encoded by using a geometric transformation.

The advantages of the prediction method according to the invention include the ability to predict not only the displacing motion of the block but also other types of motion, the improvement in the visual quality of the prediction image when the block structure disappears, and the applicability of the prediction method in a hybrid encoder.

The number of selected basic points is usually equal to the number of blocks to be encoded in the image (that is, usually blocks consisting of 16x16 pixels, though it is also possible to use other block sizes). The advantage to be obtained thereby is that the motion vectors can be transmitted in connection with the encoded blocks.

Points may be selected from the image to be encoded while the reference image is searched to find points corresponding to the selected points, or points may be selected from the reference image, and the image to be encoded is searched to find points corresponding to the selected points. Both cases result in a similar division into corresponding areas. The difference is that the points always have to be selected from the image to be encoded without using the contents of the image, otherwise the decoder could not make the same selection. When the selection is made by utilizing the reference image, i.e. the preceding image in the processing order, which has already been encoded, the image can be searched to locate so-called relevant points by utilizing the contents of the image, as the same search can be performed in the decoder.

In the simplest method, one point is selected from each block to be encoded in the image to be encoded (a point from the centre of the block).

A method selecting points from the reference image in the following way is especially important: The mid-points of the blocks are selected first. The neighbourhood of each point is then searched by an edge indicator to find the closest edge point, which is then selected in place of the mid-point of the block. If no edge points are found, the mid-point is selected. The edge point thus refers to a point positioned at the edge of an object displayed in the image. An advantage of the selection of this kind of point is that a point corresponding accurately to it is easier to find than a point corresponding to an "ordinary" point, and that the geometric mapping causes less distortions if the edges of the areas to be mapped follow the edges of the objects displayed in the image as accurately as possible.

Points to be mapped may also be selected with the accuracy of half a pixel. As the selection is directed to the spatial coordinates of the point instead of the value of the point, i.e. its intensity value, which is otherwise examined e.g. when corresponding points are searched for, the accuracy of half a pixel does not require interpolation at the selection stage.

The selection of the points may also be weighted so that a greater number of points are selected from more active image areas than from uniform areas.

Block-based motion estimation is applied to find corresponding points for the selected basic points. The block may be selected e.g. in such a way that the selected basic point is in the centre of the block. Block matching may be performed similarly as in the method presently in use, but better results are obtained with the following modifications: larger block sizes are used (e.g. 30x30 in place of 16x16). In such a case, however, it is not necessary to use all points in the block, but the number of points in the block can be reduced to such an extent that calculation will not increase as compared with the present-day methods (e.g. by including only every third point in the calculation both in the vertical and horizontal direction). In addition, an error occurring in the vicinity of the mid-point of the block has to be weighted upon calculating the error of block matching in order that the motion of the selected point in particular would be estimated accurately. Motion compensation thus clearly puts weight on the estimation of the motion of the mid-point instead of the entire block.

In the search for the corresponding points it is also possible to apply an accuracy of half a pixel, as in the methods in present use.

Corresponding areas are formed both in the image to be encoded and in the reference image by combining on one hand the selected points and on the other hand their corresponding points with each other. A natural method is to divide the points into rows in the horizontal direction, each row containing an equal number of points, and into columns in the vertical direction, each column likewise having an equal number of points. Boundary lines passing through all points of a row or a column thereby divide the image into quadrangles. Accordingly, the corresponding areas are not necessarily equal in shape or size. In order that the entire image area could be covered, points are also selected from the edges of the image.

In the prediction the areas of the reference image are mapped onto the corresponding areas of the image to be encoded. The mapping is performed by geometric transformation, of which the most important are affine, perspective and bilinear mapping. The mapping is defined entirely by the four corner coordinates of the area, so that no mapping information need to be transmitted.

Mapping takes place reversely in such a way that a corresponding point is located in the reference image for each points of the image to be encoded. The corresponding points are calculated for all points in each area by using the same mapping defining the area. The coordinates of the corresponding points produced by mapping (geometric transformation) are not usually integers, and the value of the pixel corresponding to such coordinates has to be calculated by interpolation. Methods of interpolation suitable for the purpose include bilinear interpolation or reproduction of the closest neighbouring point.

When affine transformation is used, each quadrangle can be divided by a diameter into two triangles, which are mapped fully independently of each other. This provides the advantage that a possible inappropriately mapped point will not always cause distortions within the entire area of the quadrangle. Mapping a triangle onto a triangle defines a fully affine transformation, which is also extremely quick and easy to realize, being thus well-suited for video applications.

On mapping triangles by affine transformation, the performance can be improved by selecting the right one from the two possible ways of dividing a quadrangle into two triangles (i.e. whether the diameter is drawn from the left top corner to the right bottom corner or from the right top corner to the left bottom corner). It is desirable that the obtained two areas have an image content as uniform as possible. As the division can be made while utilizing the reference image, the right solution can be found in both the encoder and the decoder without transmitting additional information. The sum of the variances of the triangles, for instance, can be used as a criterion for selection, whereby the division is selected so that the sum is the smaller one of the two alternatives. Simpler criteria may also be applied. Of course, the division is made in the image to be encoded in the same way as in the reference image.

The developed prediction method allows the prediction of types of motion that cannot be predicted by the methods presently in use. Such types of motion include rotation, zooming and a change in the shape of an object. In addition, the block structure typical of the presently used method has been dispensed with in the prediction image. The block structure introduces high-frequency components into the image, and hampers the operability of the transform encoding of the hybrid encoder. This problem is particularly severe in connection with subband encoding. A marked improvement in the subjective quality of the prediction image may also decrease the need for transmitting the prediction error.

A further major operational difference as compared with the motion compensation method presently in use is that the prediction image is constructed by changing the dimensions of the reference image without losing anything from the image. In the traditional method the prediction image is constructed from reference image sections in such a way that all sections are not usually used; on the other hand, some sections are used several times. This is both an advantage and a disadvantage for the new method.

An advantage of mapping a whole image onto a whole image is that the selected points can be mapped either from the image to be encoded onto the reference image, or *vice versa* (as described above). In such a way it is possible to utilize the image content in the mapping without the transmission of additional information to the receiver. In the traditional method the prediction always has to be done so that the reference image is searched to find a prediction of the blocks of the image to be encoded, as otherwise part of the image to be encoded would remain without prediction.

For this reason, however, the traditional method is sometimes also able to predict situations in which a moving object has left the image area or has covered something. The method according to the invention always fails to some extent in such a situation, as an image section that has disappeared or has been covered will be visible in the prediction image. Therefore the disclosed method should usually be applied together with the traditional method.

When the disclosed method is used to totally replace the traditional motion-compensated prediction, the method may be realised in the hybrid encoder simply by changing the interpretation of motion vectors. Motion vectors are used to forward information indicating the position of the basic point or the corresponding point and their mutual motion.

When the method is used in parallel with the traditional motion compensation, a new prediction mode has to be taken into use for the new prediction method. In parallel use, it is possible to utilize the fact that when the selected point is within the block to be encoded, the motion vector searched out for it represents properly even the motion of the entire block. This motion vector may thus also be used as a starting point for traditional prediction.

The encoder thus first calculates all motion vectors for the selected points, and forms a prediction for the block to be encoded by using both the new method and the traditional method. The motion vector of the point corresponding to the concerned block is used as a motion vector in the traditional method. The encoder selects the better one from the two predictions and calculates the prediction error on the basis thereof. Information on the selected mode is transmitted to the decoder.

As, however, the motion vector calculated for estimating the motion of the selected points is not usually the best possible for use as a basis for traditional motion compensation, the following procedure is to be preferred in certain cases: A prediction is calculated for the block by the new method, in addition to which a prediction is calculated by the traditional method, for which purpose a new motion vector is also searched out. The encoder thereafter compares the two predictions, and selects the better one. If the selection falls on the traditional method, an extra motion vector also has to be transmitted. This extra motion vector, however, is likely to be close in size to the vector of the point corresponding to the block, and can be encoded efficiently by transmitting only the difference between the new vector and the vector of the point corresponding to the block. Whether the improvement so obtained is sufficient to justify the transmission of the extra vector depends on the way the points have been selected originally and on the available transmission capacity.

In particular, it is to be noted that the prediction method according to the invention may be applied in devices complying with the present standards (H.261, MPG-1, MPG-2) as an extra mode in such a way that the method is used when both of the communicating devices are able to apply it.

In the following the prediction method according to the invention will be described more fully with reference to the attached drawings, in which
Figures 1 and 5 show a preceding image in a processing order, where an object to be mapped is in an upright position;
Figures 2 and 6 show an image to be encoded, where an object to be mapped has displaced and rotated with respect to the preceding image in the processing order, shown in Figures 1 and 5;
Figures 3, 4, 7 and 8 show areas consisting of four points picked up from Figures 1, 2, 5 and 6, respectively.

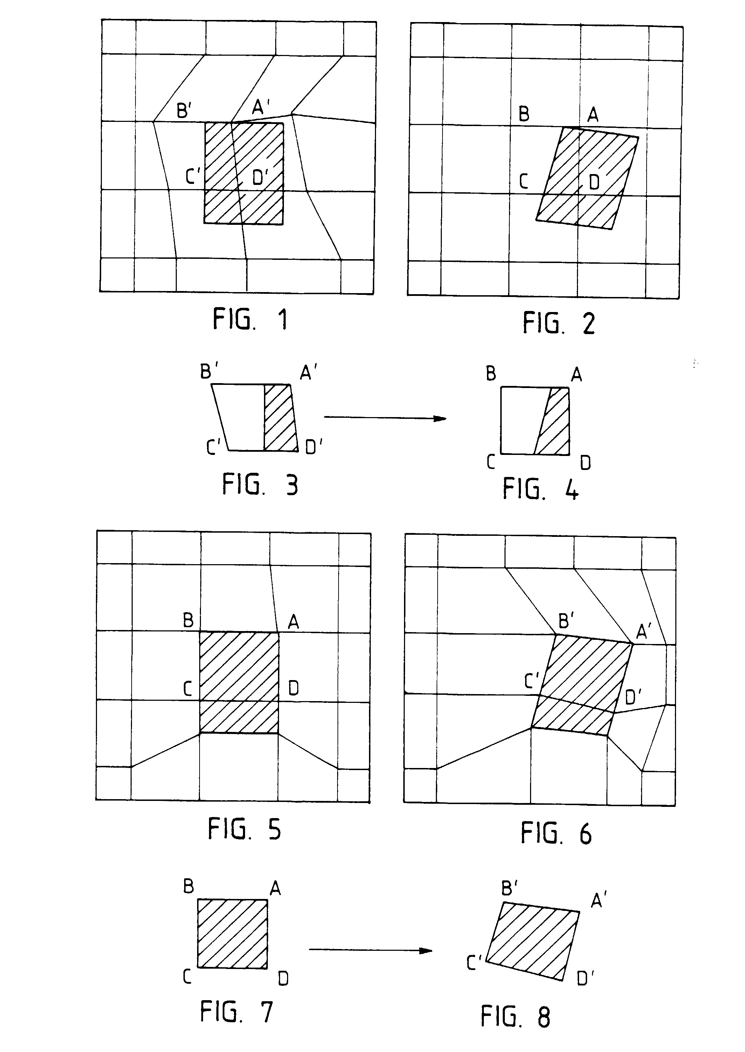

Figures 1 to 4 illustrate the procedure according to the first embodiment of the method according to the invention. In this case, the starting point is the image to be encoded, shown in Figure 2, which image is divided into areas having the shape of a quadrangle by points selected from Figure 2. One of the quadrangles is indicated ABCD and shown separately in Figure 4. The preceding image in the processing order, shown in Figure 1, is searched to find points corresponding to the points selected from Figure 2. The points A, B, C and D of Figure 2 thus have the corresponding points A', B', C' and D', and the quadrangle A'B'C'D' formed by them is shown separately in Figure 3. The corresponding points have been found by comparing the values of the picture elements or pixels of the image to be encoded with the values of the pixels of the previously processed preceding image in the processing order. In the search it is thereby possible to weight the neighbourhood of the searched point in order that the corresponding points could be located as reliably as possible. As appears from Figures 3 and 4, the quadrangle of Figure 4, in this specific case a rectangle, is mapped onto a clearly different quadrangle in Figure 3. It is to be noted that the areas defined by the corresponding points need not even, in fact, be quadrangles but they may also be triangles, line segments, or points, if one or more of the basic points of the image to be encoded are mapped onto the same corresponding point in the preceding image in the processing order. To produce a prediction, the quadrangle A'B'C'D' of Figure 3 is now subjected to a geometric transformation to transform it into the shape and size of the quadrangle ABCD. Details of this transformation have already been described above.

After the geometric transformation has been performed by the encoder, the difference between the prediction and the image to be encoded is calculated. This difference is then compressed by the above-described conventional methods before its transmission to the decoder.

In order that the decoder could reconstruct the image to be encoded, information is also needed about the displacement of the corresponding points of the preceding image in the processing order with respect to the basic points of the image to be encoded. This information is transmitted to the decoder in the form of motion vectors, as described above.

The decoder, which receives the motion vectors, can generate the same prediction based on geometric transformation as the encoder. After this prediction is corrected in accordance with the differences received and decoded by the decoder, the original video image to be encoded can be reconstructed.

Figures 5 to 8 illustrate an alternative procedure for the method according to the invention. Now the starting point is the preceding image in the processing order, shown in Figure 5, from which basic points dividing the image into quadrangle-shaped areas have been selected. In the case of Figure 5, the basic points have been selected so that they fall at the edges of an object in the image. The four basic points are indicated with the letters A, B, C and D, and the quadrangle ABCD defined by them is shown separately in Figure 7. The image to be encoded, shown in Figure 6, is then searched to locate points A', B', C' and D' corresponding to the basic points A, B, C and D. The quadrangle A'B'C'D' defined by the corresponding points is shown separately in Figure 8. In the same way as in the embodiment of Figures 1 to 4, a geometric transformation is now performed, in which the quadrangle ABCD located in the preceding image in the processing order is mapped into the size and shape of the corresponding area A'B'C'D' in the image to be encoded. After the performance of the transformation the method proceeds in quite the same way as in connection with the embodiment of Figures 1 to 4.

The method according to the invention and its application in connection with video image compression has been described only by a few exemplifying solutions, and it is to be understood that the described method alternatives can be further modified without, however, deviating from the scope of protection defined in the attached claims. In addition, it should be noted that Figures 1 to 8 are mere illustrations of the methods according to the invention; in practice, a far greater number of pairs of a basic point and a corresponding point are used. Similarly, for the sake of clarity, the object to be mapped is shown in the figures in a larger size than normally, i.e. it covers a clearly larger area of the figure than usual.

## Claims

1. Method for predicting a video image on the basis of a preceding video image in a processing order for use in compressed transmission or storing of video images, wherein a prediction is generated for a video image to be encoded in an encoder encoding the video image on the basis of a preceding image in the processing order, **characterized** by
dividing the video image to be encoded into blocks;
selecting a point from each block of the image to be encoded as a basic point of the concerned block, the basic points of the different blocks dividing the image to be encoded into quadrangle-shaped basic areas;
searching the preceding image in the processing order to find points corresponding to the basic points of the image to be encoded, the corresponding points dividing the preceding image in the processing order into quadrangle-shaped corresponding areas;
defining a motion vector for each pair of a basic point and a corresponding point, the motion vector indicating displacement between the points; and
performing a geometric transformation on the quadrangle-shaped corresponding areas so as to transform them into the size and shape of their basic areas for generating predictions for the basic areas of the image to be encoded.

2. Method for predicting a video image on the basis of a preceding video image in a processing order for use in compressed transmission or storing of video images, wherein a prediction is generated for a video image to be encoded in an encoder encoding the video image on the basis of a preceding video image in the processing order, **characterized** by
dividing the preceding image in the processing order into blocks;
selecting a point from each block of the preceding image in the processing order as a basic point (1,...6) of the concerned block, the basic points of the different blocks dividing the preceding image in the processing order into quadrangle-shaped basic areas;
searching the image to be encoded to find points (1',...6') corresponding to the basic points (1,...6) of the blocks of said preceding image in the processing order, the corresponding points dividing the image to be encoded into corresponding quadrangle-shaped areas;
defining a motion vector for each pair of a basic point and a corresponding point, the motion vector indicating displacement between the points; and
performing a geometric transformation on the quadrangle-shaped basic areas so as to transform them into the size and shape of their corresponding areas for generating predictions for the basic areas of the image to be encoded.

3. Method according to claim 1 or 2, **characterized** in that the mid-point of each block is selected as the basic point.

4. Method according to claim 2, **characterized** in that a point positioned closest to the mid-point of each block at the edge of an object displayed in the image is selected as the basic point.

5. Method according to any of claims 1 to 4, **characterized** in that the division into blocks is realized with a weighting such that smaller block size is selected at an object in the image than elsewhere in the image.

6. Method according to claim 1 or 2, **characterized** in that the basic points and/or their corresponding points are positioned within areas between the actual pixels of the image, whereby their coordinates are not integers.

7. Method according to claim 1 or 2, **characterized** in that prior to the geometric transformation the quadrangles to be transformed are divided into two triangles to be transformed separately.

8. Method according to claim 7, **characterized** in that the division into two triangles is effected by selecting from two possible alternatives the one which produces triangles more uniform in terms of the intensity values of their pixels in the preceding image in the processing order.

9. Use of a method according to claim 1 or 2 in compressed transmission and storing of a video image as one mode in parallel with modes defined for other prediction methods so that a mode intended to be applied to a particular block to be encoded is transmitted or stored in connection with this block.

10. Method according to claim 1 or 2 wherein the motion vector represents the motion of an entire block to be encoded.

## Patentansprüche

1. Verfahren zum Vorhersagen eines Videobilds auf Grundlage eines in einer Verarbeitungsreihenfolge vorangegangenen Videobilds zur Verwendung bei komprimierter Transmission oder Abspeicherung von Videobildern, wobei für ein in einem Codierer, der das Videobild auf Grundlage eines in der Verarbeitungsreihenfolge vorangegangenen Bilds codiert, eine Vorhersage für ein zu codierendes Videobild erzeugt wird, **gekennzeichnet durch:**
- Unterteilen des zu codierenden Videobilds in Blöcke;
- Auswählen eines Punkts aus jedem Block des zu codierenden Bilds als Grundpunkt des betroffenen Blocks, wobei die Grundpunkte der verschiedenen Blöcke das zu codierende Bild in viereckige Grundbereiche unterteilen;
- Durchsuchen des in der Verarbeitungsreihenfolge vorangegangenen Bilds zum Auffinden von Punkten, die den Grundpunkten des zu codierenden Bilds entsprechen, wobei die entsprechenden Punkte das in der Verarbeitungsreihenfolge vorangegangene Bild in viereckige, entsprechende Bereiche unterteilen;
- Definieren eines Bewegungsvektors für jedes Paar aus einem Grundpunkt und einem entsprechenden Punkt, wobei der Bewegungsvektor die Verschiebung zwischen den Punkten anzeigt; und
- Ausführen einer geometrischen Transformation an den viereckigen, entsprechenden Bereichen, um sie in die Größe und Form ihrer Grundbereiche zu transformieren, um Vorhersagen für die Grundbereiche des zu codierenden Bilds zu erzeugen.

2. Verfahren zum Vorhersagen eines Videobilds auf Grundlage eines in einer Verarbeitungsreihenfolge vorangegangenen Videobilds zur Verwendung bei komprimierter Transmission oder Abspeicherung von Videobildern, wobei für ein in einem Codierer, der das Videobild auf Grundlage eines in der Verarbeitungsreihenfolge vorangegangenen Bilds codiert, eine Vorhersage für ein zu codierendes Videobild erzeugt, **gekennzeichnet durch:**
- Unterteilen des in der Verarbeitungsreihenfolge vorangegangenen Bilds in Blöcke;
- Auswählen eines Punkts aus jedem Block des in der Verarbeitungsreihenfolge vorangegangenen Blocks als Grundpunkt (1, ... 6) des betreffenden Blocks, wobei die Grundpunkte der verschiedenen Blöcke das in der Verarbeitungsreihenfolge vorangegangene Bild in viereckige Grundbereiche unterteilen;
- Durchsuchen des zu codierenden Bilds, um Punkte (1', ... 6') aufzufinden, die den Grundpunkten (1, ... 6) der Blöcke des in der Verarbeitungsreihenfolge vorangegangenen Bilds entsprechen, wobei die entsprechenden Punkte das zu codierende Bild in entsprechende viereckige Bereiche unterteilen;
- Definieren eines Bewegungsvektors für jedes Paar aus einem Grundpunkt und einem entsprechenden Punkt, wobei der Bewegungsvektor die Verschiebung zwischen den Punkten anzeigt; und
- Ausführen einer geometrischen Transformation an den viereckigen Grundbereichen zum Transformieren derselben in die Größe und die Form ihrer entsprechenden Bereiche zum Erzeugen von Vorhersagen für die Grundbereiche des zu codierenden Bilds.

3. Verfahren nach Anspruch 1 oder 2, **dadurch gekennzeichnet**, dass als Grundpunkt der Mittelpunkt jedes Blocks ausgewählt wird.

4. Verfahren nach Anspruch 2, **dadurch gekennzeichnet**, dass als Grundpunkt ein Punkt ausgewählt wird, der am nächsten zum Mittelpunkt jedes Blocks auf dem Rand eines im Bild angezeigten Objekts liegt.

5. Verfahren nach einem der Ansprüche 1 bis 4, **dadurch gekennzeichnet**, dass die Unterteilung in Blöcke mit einer solchen Gewichtung vorgenommen wird, dass bei einem Objekt im Bild eine kleinere Blockgröße ausgewählt wird als an anderen Orten im Bild.

6. Verfahren nach Anspruch 1 oder 2, **dadurch gekennzeichnet**, dass die Grundpunkte und/oder ihre entsprechenden Punkte innerhalb Bereichen zwischen den tatsächlichen Bildpunkten des Bilds liegen, wodurch ihre Koordinaten keine ganzen Zahlen sind.

7. Verfahren nach Anspruch 1 oder 2, **dadurch gekennzeichnet**, dass vor der geometrischen Transformation die zu transformierenden Vierecke in zwei gesondert zu transformierende Dreiecke unterteilt werden.

8. Verfahren nach Anspruch 1, **dadurch gekennzeichnet**, dass die Unterteilung in zwei Dreiecke dadurch ausgeführt wird, dass aus zwei möglichen Alternativen diejenige ausgewählt wird, die gleichmäßigere Dreiecke hinsichtlich der Intensitätswerte ihrer Bildpunkte im in der Verarbeitungsreihenfolge vorangegangenen Bild erzeugt.

9. Verwendung eines Verfahrens nach Anspruch 1 oder 2 bei komprimierter Übertragung und Abspeicherung eines Videobilds als ein Modus parallel zu für andere Vorhersageverfahren definierten Modi, so dass ein Modus, der zur Anwendung bei einem speziellen zu codierenden Block vorgesehen ist, in Verbindung mit diesem Block übertragen oder abgespeichert wird.

10. Verfahren nach Anspruch 1 oder 2, bei dem der Bewegungsvektor die Bewegung eines gesamten zu codierenden Blocks repräsentiert.

## Revendications

1. Procédé pour prédire une image vidéo sur la base d'une image vidéo précédente dans un ordre du traitement pour utilisation dans la transmission compressée ou la mémorisation d'images vidéo, dans lequel une prédiction est générée pour une image vidéo qui doit être codée dans un codeur codant l'image vidéo sur la base d'une image précédente dans l'ordre du traitement **caractérisé** par les étapes consistant à
diviser l'image vidéo qui doit être codée en blocs ;
sélectionner un point à partir de chaque bloc de l'image qui doit être codée comme point de base du bloc concerné, les points de base des différents blocs divisant l'image qui doit être codée en zones de base en forme de quadrilatère ;
rechercher l'image précédente dans l'ordre du traitement afin de trouver des points correspondant au point de base de l'image qui doit être codée, les points correspondants divisant l'image précédente dans l'ordre du traitement en zones correspondantes en forme de quadrilatère ;
définir un vecteur de mouvement pour chaque paire d'un point de base et d'un point correspondant, le vecteur de mouvement indiquant les déplacements entre les points ; et
effectuer une transformation géométrique sur les zones correspondantes en forme de quadrilatère de façon à les transformer en la dimension et la forme de leurs zones de base pour générer des prédictions pour les zones de base de l'image qui doit être codée.

2. Procédé pour prédire une image vidéo sur la base d'une image vidéo précédente dans un ordre de traitement pour utilisation dans la transmission compressée ou dans la mémorisation d'image vidéo, dans lequel une prédiction est générée pour une image vidéo qui doit être codée dans un codeur codant l'image vidéo sur la base d'une image vidéo précédente dans l'ordre du traitement, **caractérisé** par les étapes consistant à
diviser l'image précédente dans l'ordre du traitement en blocs ;
sélectionner un point à partir de chaque bloc de l'image précédente dans l'ordre du traitement comme point de base (1,... 6) du bloc concerné, les points de base des différents blocs divisant l'image précédente dans l'ordre du traitement en zones de base en forme de quadrilatère ;
rechercher l'image qui doit être codée pour trouver des points (1'...6') correspondant aux points de base (1,... 6) des blocs de ladite image précédente dans l'ordre du traitement, les points correspondants divisés en l'image qui doit être codée en zones en forme de quadrilatère correspondantes ;
définir un vecteur de mouvement pour chaque paire d'un point de base et d'un point correspondant, le vecteur de mouvement indiquant le déplacement entre les points ; et
effectuer une transformation géométrique sur les zones de base en forme de quadrilatère de façon à les transformer en la dimension et la forme de leurs zones correspondantes pour générer les prédictions pour les zones de base de l'image qui doit être codée.

3. Procédé selon la revendication 1 ou 2, **caractérisé** en ce que le point milieu de chaque bloc est sélectionné comme le point de base.

4. Procédé selon la revendication 2, **caractérisé** en ce qu'un point positionné le plus près du point milieu de chaque bloc au niveau du port d'un objet visualisé dans l'image est sélectionné comme le point de base.

5. Procédé selon l'une quelconque des revendications 1 à 4, **caractérisé** en ce que la division en blocs est réalisée avec une pondération de sorte que la dimension de bloc la plus petite est sélectionnée au niveau d'un objet dans l'image qui est à tout endroit quelconque dans l'image.

6. Procédé selon la revendication 1 ou 2, **caractérisé** en ce que les points de base et/ou leurs points correspondants sont positionnés à l'intérieur de zones entre les pixels actuels de l'image, d'où il résulte que leurs coordonnées ne sont pas des nombres entiers.

7. Procédé selon la revendication 1 ou 2, **caractérisé** en ce qu'avant la transformation géométrique, les quadrilatères qui doivent être transformés sont divisés en deux triangles qui doivent être transformés séparément.

8. Procédé selon la revendication 7, **caractérisé** en ce que la division en deux triangles est effectuée en sélectionnant à partir de deux variantes possibles celle qui produit des triangles les plus uniformes en termes de valeurs d'intensité de leurs pixels dans l'image précédente dans l'ordre du traitement.

9. Utilisation d'un procédé selon la revendication 1 ou 2 dans la transmission compressée et la mémorisation d'image vidéo comme un mode en parallèle avec les modes définis pour d'autres procédés de prédiction de sorte qu'un mode destiné à être appliqué à un bloc particulier qui devrait être codé est transmis ou mémorisé en liaison avec ce bloc.

10. Procédé selon la revendication 1 ou 2, dans lequel le vecteur de mouvement représente le mouvement d'un bloc entier qui doit être codé.
